# EUROPÄISCHE PATENTSCHRIFT

(11) **EP 3 116 090 B1**
(45) Veröffentlichungstag und Bekanntmachung des Hinweises auf die Patenterteilung: **02.09.2020**
(21) Anmeldenummer: 16177737.0
(22) Anmeldetag: 04.07.2016
(51) Int. Cl.: H02J 3/38, H02J 3/14

(54) **VERFAHREN ZUR STEUERUNG DER LASTVERTEILUNG IN EINEM STROMNETZ**
METHOD FOR CONTROLLING THE LOAD DISTRIBUTION IN A POWER GRID
PROCÉDÉ DE COMMANDE DE LA RÉPARTITION DE CHARGE DANS UN RÉSEAU ÉLECTRIQUE

(30) Priorität: 10.07.2015 DE 102015111198
(43) Veröffentlichungstag der Anmeldung: 11.01.2017
(73) Patentinhaber: Deutsche Telekom AG, 53113 Bonn (DE)
(72) Erfinder: Huber, Michael, 67434 Neustadt a. d. W. (DE)
(74) Vertreter: Braun-Dullaeus Pannen Emmerling Patent- & Rechtsanwaltspartnerschaft mbB

(56) Entgegenhaltungen:
- DE-A1-102010 017 264
- DE-A1-102012 103 081
- US-A1- 2013 297 959
- US-A1- 2014 316 599
- HARALD VOGT ET AL: "Market-based prosumer participation in the smart grid", DIGITAL ECOSYSTEMS AND TECHNOLOGIES (DEST), 2010 4TH IEEE INTERNATIONAL CONFERENCE ON, IEEE, PISCATAWAY, NJ, USA, 13. April 2010 (2010-04-13), Seiten 592-597, XP031781601, ISBN: 978-1-4244-5551-5
- MICHIORRI A ET AL: "A local energy management system for solar integration and improved security of supply: The Nice Grid project", INNOVATIVE SMART GRID TECHNOLOGIES (ISGT EUROPE), 2012 3RD IEEE PES INTERNATIONAL CONFERENCE AND EXHIBITION ON, IEEE, 14. Oktober 2012 (2012-10-14), Seiten 1-6, XP032332669, DOI: 10.1109/ISGTEUROPE.2012.6465667 ISBN: 978-1-4673-2595-0
- LI DING ET AL: "Distributed Smart-Home Decision-Making in a Hierarchical Interactive Smart Grid Architecture", IEEE TRANSACTIONS ON PARALLEL AND DISTRIBUTED SYSTEMS, IEEE SERVICE CENTER, LOS ALAMITOS, CA, US, vol. 26, no. 1, 1 January 2015 (2015-01-01), pages 75-84, XP011567420, ISSN: 1045-9219, DOI: 10.1109/TPDS.2014.2308204 [retrieved on 2014-12-09]

## Beschreibung

Die Erfindung betrifft ein Verfahren und ein System zur Steuerung der Lastverteilung in einem von einem Energieversorger versorgten Stromnetz, über das Kleinverbraucher, wie private Haushalte und kleine industrielle Abnehmer, versorgt werden, wobei einige der an das Stromnetz angeschlossenen Kleinverbraucher als Privaterzeuger selber, insbesondere aus Photovoltaikanlagen und/oder aus Blockheizkraftwerken, Strom erzeugen und in das Stromnetz einspeisen. Um die von jedem Privaterzeuger eingespeiste Strommenge nachzuhalten, wird diese als individuelle Zufuhrmenge gezählt.

Sowohl Spitzenlasten als auch Überangebote stellen die Energieversorger und die Netzbetreiber noch immer vor große Herausforderungen. Um Spitzenlasten bewältigen zu können, werden schnelle Spitzenlastkraftwerke eingesetzt, mit denen die Regulierung jedoch technisch aufwendig und entsprechend teuer ist. Im umgekehrten Fall des Überangebotes durch hohe Zufuhrmengen, beispielsweise hervorgerufen bei großer Sonneneinstrahlung oder viel Wind, muss das Überangebot hingegen zeitnah abgeführt respektive die Kraftwerkskapazitäten zeitnah zurück gefahren werden, um die Netzstabilität gewährleisten zu können. Die entsprechende Regulierung geht auch mit einem hohen Aufwand einher.

Insofern haben Energieversorger großes Interesse an Ausgleichsmöglichkeiten, um Spitzenlasten reduzieren und/oder Überangebote abbauen zu können. In diesem Zusammenhang ist aus der DE 10 2012 224 128 A1 ein Verfahren bekannt, bei dem Energieversorger die Einschaltzeiten von Strom "fressenden" Haushaltsgeräten in gewissem Rahmen beeinflussen und damit einen Ausgleich bewirken können. Zudem ist aus der DE 10 2015 104 703 A1 ein Verfahren bekannt, wobei dem Energieversorger seitens eines Haushalts ein Zeitfenster für einen Einschaltzeitpunkt eines Haushaltsgerätes vorgegeben wird und der Energieversorger dann in Abhängigkeit der aktuell ermittelten Netzauslastung innerhalb des Zeitfensters unmittelbar einen Einschaltbefehl an das Haushaltsgerät überträgt. Auf diese Weise ist ein gewisser Lastausgleich dadurch möglich, dass zu erwartende Spitzenlasten und Überangebote abgebaut werden.

Nachteil an den bislang bekannten Verfahren ist, dass sie die Einspeisung der Privaterzeuger aus Photovoltaik- und/oder aus Blockheizkraftwerken kaum berücksichtigen. Im Übrigen sind große Strommengen, die von den Privaterzeugern ins Niederspannungsnetz eingespeist werden, wegen der gesunkenen Einspeisevergütungen für Privaterzeuger nicht mehr sonderlich lukrativ. So liegt der Einkaufspreis für Strom aktuell bei ca. 20 € Ct pro kWh, so dass es für den Privaterzeuger günstiger ist, den selbst erzeugten Strom auch selbst zu verbrauchen, statt ihn in das Niederspannungsnetz einzuspeisen. Allerdings ist der Eigenverbrauch im Ausmaß der mitunter erzeugten großen Mengen kaum möglich und entsprechende Speichermedien stehen Privaterzeugern nicht zu Verfügung.

So wurden bis Ende 2014 bundesweit etwa 1,5 Millionen Photovoltaik-Anlagen mit einer Nennleistung von 38,5 GW installiert, die ihre Leistung größtenteils "auf der letzten Meile", also in die Niederspannungsnetze (230V - 400V) für die Feinverteilung, einspeisen. Die aktuelle Einspeisevergütung bei kleinen bis mittleren Photovoltaik-Neuanlagen bis 40 kWp beträgt derzeit etwa 12 € Ct pro kWh.

Zudem existieren aktuell etwa 50.000 kleine bis mittlere private Blockheizkraftwerke, die nach dem Prinzip der Kraft-Wärme-Kopplung arbeiten und die ihre Überschussleistung ebenfalls auf der Niederspannungsebene einspeisen. Blockheizkraftwerke haben einen sehr hohen Wirkungsgrad von etwa 90% (30% Strom, 60% Wärmeauskopplung), so dass der Strom eher ein Nebenprodukt der Anlage ist. Hingegen liegt der Hauptzweck in der thermischen Nutzung zur Heizung. Die Stromeinspeisung der Blockheizkraftwerke wird aktuell mit 5,11 € Ct pro kWh vergütet.

Insgesamt gibt es somit auf der unteren Netzebenebene große von Privaterzeugern generierte Strommengen, die ungeregelt in die Niederspannungsnetze "gepumpt" werden. Das stellt die Energieversorger vor das Problem, dass die Energie nicht immer an der Stelle im Gesamtnetz zur Verfügung steht, wo sie gerade gebraucht wird. Zur Absicherung der dadurch beeinflussten Netzstabilität sind hohe Investitionen in die Netzinfrastruktur erforderlich.

Aus DE 10 2010 017 264 A1 ist eine Steuerung des Energiehaushaltes eines einzelnen Gebäudes bekannt, mit der es möglich ist, die lokal im Gebäude erzeugte Energie durch entsprechende Steuerung im Gebäude wieder zu verbrauchen. Als Folge sinkt die in das Stromverteilnetz eingespeiste Energie und damit die Belastung des Stromverteilnetzes.

Aus US 2014/316599 A1 ist ein Verfahren bekannt, dass den Betriebsstatus von Geräten von Kleinverbraucher anpasst, wenn die vom Verbraucher nutzbare elektrische Leistung begrenzt ist. Hierzu erfasst eine Detektionseinheit die Betriebsanforderungen von Geräten in vorbestimmten Zeitintervallen, eine Auswertungseinheit wertet die Betriebsanforderungen mehrere Geräte aus und berechnet einen Betriebsfahrplan in Abhängigkeit von der verfügbaren Energiemenge, der den Stromverbrauch der Geräte regelt.

Aus DE 10 2012 103 081 A1 ist ein Verfahren zum Optimieren eines zeitlichen Verlaufs eines Verbrauchs von elektrischer Leistung durch eine Gruppe von unterschiedlichen Verbrauchern in Hinblick auf ein Angebot an elektrischer Leistung bekannt, das elektrische Leistung von mindestens einem Wind- oder Solarstromgenerator sowie Leistung umfasst, die bidierektional mit einem Speicher für elektrische Energie und/oder einem öffentlichen Stromnetz ausgetauscht wird, werden charakteristische zeitliche Verläufe eines Verbrauchs von elektrischer Leistung durch die einzelnen Verbraucher der Gruppe erfasst. Zum zeitlichen Verlauf des Angebots an elektrischer Leistung von dem mindestens einen Stromgenerator und für einen in der Zukunft liegenden Zeitraum wird eine Prognose erstellt, und basierend auf der Prognose, den charakteristischen zeitlichen Verläufen des Verbrauchs der einzelnen Verbraucher und Bedingungen des bidirektionalen Austausches elektrischer Leistung mit dem Speicher für elektrische Energie und/oder dem öffentlichem Stromnetz wird ein Plan für die Zuteilung von elektrischer Leistung an die einzelnen Verbraucher über den in der Zukunft liegenden Zeitraum erstellt.

"Market-based prosumer participation in the smart grid" von "Harald Vogt; Holger Weiss; Patrik Spiess; Achim P Karduck" in "Digital Ecosystems and Technologies (DEST), 2010 4th IEEE International Conference on, 20100413 IEEE, Piscataway, NJ, USA - ISBN 978-1-4244-5551-5 ; ISBN 1-4244-5551-0" beschreibt ein Energiemanagementsystem zum Minimieren von Energiekosten in einem intelligenten Stromnetz, indem effizient Gebrauch von erneuerbaren Energiequellen gemacht wird (wie beispielsweise Windenergie oder Sonnenenergie). In einem ähnlichen Zusammenhang beschreibt auch "A local energy management system for solar integration and improved security of supply: The Nice Grid project" von "Michiorri A; Girard R; Kariniotakis G; Lebosse C; Albou S" in "Innovative Smart Grid Technologies (ISGT Europe), 2012 3rd IEEE PES International Conference and Exhibition on, 20121014 IEEE - ISBN 978-1-4673-2595-0; ISBN 1-4673-2595-3" ein intelligentes Stromversorgungsnetz von Solarzellen in einer Nachbarschaft.

Ding Li & al.: "Distributed Smart-Home Decision-Making in a Hierarchical Interactive Smart Grid Architecture", in "IEEE transactions on parallel and distributed systems, 26 (1), 75-84, 25. February 2014, DOI: 10.1109/TPDS.2014.2308204" beschreibt eine interaktive Echtzeit Umgebung für Nutzer in einem intelligenten Stromnetzwerk, dass zur Verbesserung der Netzstabilität und der Qualität des Service beiträgt.Die US 2013/0297959 A1 lehrt ein Energiesteuerungssystem, das zur Reduzierung des Energieverbrauchs aus einem Stromnetz beiträgt und umfasst einen Leistungsmesser, der das erste Energiespeichersignal empfängt und ein zweites Energiespeichersignal zum Empfang durch ein Steuergerät erzeugt. Die Zieltemperatur eines Thermostats wird in Reaktion auf das zweite Energiespeichersignal für einen bestimmten Zeitraum geändert. Die Steuervorrichtung kann ein drittes Energiesparsignal zum Empfang durch einen Energiesparadapter für eine zugeordnete Energie verbrauchende Einheit erzeugen, um nur einen begrenzten Betrieb der Energie verbrauchenden Einheit zu ermöglichen.

Aufgabe der Erfindung ist es nunmehr, ein Verfahren respektive ein System zur Steuerung der Lastverteilung vorzuschlagen, das sich einfach und mit kostengünstigen Mitteln umsetzen lässt und das einen wirkungsvollen Lastausgleich unter Berücksichtigung der von den Privaterzeugern in das Netz eingespeisten Strommengen gewährleisten kann.

Diese Aufgaben werden durch das Verfahren nach Anspruch 1 und das System nach Anspruch 6 gelöst. Bevorzugte Ausgestaltungen ergeben sich aus den jeweiligen Unteransprüchen.

Entsprechend der Ansprüche liegt die grundlegende Idee der erfindungsgemäßen Lösung darin, Privaterzeuger und Kleinverbraucher ortsnah auf idealerweise der untersten Ebene beispielsweise der Stadt- oder Ortsnetze - mithin in Teilnetzen auf Niederspannungsebene - zusammen zu bringen, um die übergeordneten Stromnetze auf höherer Spannungsebene zu entlasten und die Netzstabilität ohne Investitionen in die Stromnetzinfrastruktur zu verbessern. Erfindungsgemäß werden benachbarte Privaterzeuger und Kleinverbraucher koordiniert derart zusammen gebracht, dass der Kleinverbraucher die Strommenge verbraucht, die der benachbarte Privaterzeuger nicht selbst verbrauchen kann. Dazu werden insbesondere im Rahmen der Stadt- oder Ortsnetze Teilnetze in Form von Mikrozellen auf

Niederspannungsebene gebildet, die zum möglichst großen Teil von den darin befindlichen Privaterzeugern versorgt werden können. Vorteilhafterweise werden schon vorhandene abgegrenzte Niederspannungsnetze als Teilnetze definiert. Diese Niederspannungsnetze münden an einem Übergabepunkt, an dem eine Transformation stattfindet, in ein Mittelspannungsnetz.

Im Rahmen solcher Teilnetze können die darin befindlichen Kleinverbraucher versorgt werden, ohne dass sie diese unterste Ebene des Stromnetzes verlassen müssen. Damit wird auf der Ebene dieser Teilnetze quasi eine autarke "Eigenversorgung" ermöglicht, bei der die Energieversorger nur noch momentane Unterversorgungen ausgleichen müssen.

Anspruchsgemäß werden auf niedriger, insbesondere auf der untersten Spannungsebene, eine Anzahl von miteinander verbundenen Kleinverbrauchern in einem - respektive zu einem - Teilnetz zusammengefasst. Wie dargelegt, werden als erfindungsgemäße Teilnetze vorteilhafterweise solche definiert, die an einem gemeinsamen Versorgungsknoten zur nächst höheren Netzebene hängen. Innerhalb eines solchen Teilnetzes wird die gesamte von den Privaterzeugern in das Teilnetz eingespeiste Strommenge, mithin die private Gesamtzufuhr, als Summe aller individuellen Zufuhrmengen ermittelt. Dazu werden die jeweils bei den Privaterzeugern erzeugten Mengen erfasst und über ein Datenleitungsnetz an eine zentrale Vermittlungsplattform gesendet. Es bietet sich an, dass der Wert für die in das Teilnetz eingespeiste private Gesamtzufuhr durch eine der Vermittlungsplattform zur Verfügung stehende Funktionalität ermittelt wird. Es kann unter Umständen von Vorteil sein, Teilnetze auch auf mittlerer Spannungsebene zu definieren, wo die Einspeisung der Windkraftanlagen stattfindet.

Ein wesentlicher Aspekt des erfinderischen Kerngedankens ist, dass die Vermittlungsplattform die Kleinverbraucher vermittels Datenübertragung über die private Gesamtzufuhr informiert, damit diese ihren Verbrauch entsprechend einrichten können. Dazu wird durch die Vermittlungsplattform in Abhängigkeit des Zustandes des Teilnetzes eine Zufuhrinformation bezüglich der berechneten Gesamtzufuhr übertragen. Ein Kleinverbraucher kann seinen Verbrauch somit entsprechend danach ausrichten, ob seine erzeugenden "Netznachbarn" ausreichend Strom einspeisen. Damit ist eine komfortable Möglichkeit für den Lastausgleich innerhalb des Teilnetzes geschaffen. In dem Wissen um die zu erwartende Belastung kann der Kleinverbraucher besonders stromintensive Geräte, wie Waschmaschinen oder Wäschetrockner, dann einschalten, wenn mit einer ausreichenden "autarken" Versorgung im Teilnetz gerechnet werden kann.

Dabei gilt: Je feiner die Privaterzeuger und die Kleinverbraucher auf der unteren Spannungsebene aufeinander abgestimmt gesteuert werden können, desto stabiler ist das gesamte Stromnetz und desto weniger Investitionen sind in die Netzinfrastruktur erforderlich. Zudem werden aufwendige Stromspeichermedien bei den Privaterzeugern - zumindest teilweise - überflüssig, da die Privaterzeuger gewissermaßen einen Bonus für die von ihnen erzeugte Transparenz zu den Einspeisemengen erhalten. Damit wird die Einspeisung wieder attraktiver. Selbstverständlich können anspruchsgemäß die Kleinverbraucher gleichzeitig selber auch Privaterzeuger sein.

Die Besonderheit der Erfindung liegt darin, über eine Vermittlungs- und Betriebsplattform ortsnahe Erzeuger und Verbraucher in "Mikrozellen" im Stadt- oder Ortsnetz auf Niederspannungsebene koordiniert zusammen zu bringen. Dabei interagieren ganze Stadtviertel über die Vermittlungs- und Betriebsplattform untereinander. Im Idealfall sind Erzeuger und Verbraucher direkte Nachbarn.

Von besonderem besonderer Vorteil ist es, dass sich die Stromzufuhr und die Stromabfuhr innerhalb eines Teilnetzes auf demselben Spannungsniveau abspielen und damit keine Transformation auf andere Spannungsebenen erforderlich ist. Auf diese Weise können entsprechende Verluste vermieden werden. Ein weiterer Vorteil ist, dass sich das Verfahren problemlos in bestehende Systeme, beispielsweise in "Smart-Home" und "Smart-Metering" Lösungen, integrieren lässt.

Ganz besonders vorteilhaft ist es, wenn die Vermittlungsplattform bei der Berechnung der Gesamtzufuhr nicht nur die aktuelle Gesamtzufuhr sondern auch noch Prognosen über die zukünftig zu erwartende Gesamtzufuhr berücksichtigt.

Diese Prognosen beziehen sich vorteilhafterweise auf kurze Zeiträume, wie die nächsten Stunden. Je weiter die Prognosen in die Zukunft führen, desto unzuverlässiger sind sie. Entsprechend beinhaltet somit die übermittelte Zufuhrinformation auch die Prognosen, so dass die Kleinverbraucher wissen, womit in (näherer) Zukunft zu rechnen ist. Beispielsweise ist eine solche Prognose hilfreich, wenn entschieden werden muss, eine Waschmaschine oder einen Trockner in Betrieb zu nehmen, der einmal angeschaltet die nächsten drei Stunden laufen wird.

Im einfachsten Falle berücksichtigen die Prognosen Informationen aus Wettervorhersagen, insbesondere betreffend die Dauer und die Stärke der zu erwartenden Sonneneinstrahlung insbesondere an den Standorten der Privaterzeuger. Außerdem können Erfahrungswerte bezüglich des Verhaltens von Privaterzeugern und Kleinverbrauchern in die Prognosen einfließen. Zur Ermittlung des Verbraucherverhaltens kann die Gesamtabfuhr aus dem Teilnetz registriert werden. Es kann aber auch vorteilhaft sein, die Entnahmemengen der Kleinverbraucher individuell zu messen und die Information darüber über das Datenleitungsnetz an die zentrale Vermittlungsplattform zu senden. Dort können die Informationen dann in die Prognosemodelle einfließen. Die Kombination der aktuellen Messwerte und der Prognose werden zyklisch aktualisiert, so dass die dezentral verfügbare Energie für die einzelnen Privaterzeuger transparent wird.

Erfindungsgemäß wird die Zufuhrinformation unmittelbar an das jeweilige Strom verbrauchende Elektrogerät übermittelt und dort dem Nutzer als Einschaltinformation unmittelbar dargeboten. Die Darbietung kann vorteilhafterweise in Art einer Ampel geschehen, wobei ein grünes Signal ("Öko-Lampe") auf eine aktuelle oder prognostizierte hohe Gesamtzufuhr in das Teilnetz und damit auf einen günstigen Einschaltzeitpunkt und ein rotes Signal auf eine geringe Gesamtzufuhr in das Teilnetz hinweist. Eventuell aus Messungen vorliegende aktuelle oder prognostizierte Verbrauchzahlen innerhalb des Teilnetzes können auch Eingang in die Signalisierung finden. Durch eine solche Ampellogik an den Stromfressern hat der Nutzer als Endkunde die Transparenz über die aktuelle Gesamtzufuhr und gegebenenfalls auch Information, ob der Start der Maschine aus ökologischen Gründen zu der Zeit sinnvoll ist oder nicht.

Einige umweltbewusste Endkunden werden Ihr Stromverbrauchsverhalten anhand der Informationen zum Nutzen der Auslastung des Teilnetzes ändern. Es gibt ein weit verbreitetes grünes Gewissen in der Bevölkerung, das mit einer solchen einfachen Logik befriedigt werden kann. Wenn der Kunde sieht, dass das Einschalten der Spülmaschine zum momentanen Zeitpunkt nicht optimal ist, wird er den Einschaltzeitpunkt überdenken.

In einer anderen Ausführungsform wird der Vermittlungsplattform seitens eines Kleinverbrauchers ein Zeitfenster für den Einschaltzeitpunkt seines Haushaltsgerätes vorgegeben. Die Vermittlungsplattform überträgt dann innerhalb des Zeitfensters und in Abhängigkeit der berechneten Gesamtzufuhr einen Schaltbefehl an den Kleinverbraucher, mit dem das Haushaltsgerät unmittelbar angesteuert wird. Auf diese Weise erfolgt automatisch ein ökonomisch und entsprechend ökologisch sinnvoller Ausgleich der Belastung innerhalb des Teilnetzes, ohne dass sich der Kleinverbraucher um das Einschalten des Gerätes kümmern braucht.

Zudem ist es von Vorteil, wenn auch der Energieversorger von der aktuellen Belastung des Teilnetzes weiß und diese Information in seiner Planung berücksichtigen kann. Um das zu gewährleisten, teilt die Vermittlungsplattform dem Energieversorger die aktuelle respektive die prognostizierte Gesamtzufuhr in das Teilnetz mit, aus der dieser eine eventuell zu deckende Unterversorgung oder aber das Vorhandensein eines Versorgungsüberschusses im Teilnetz ermitteln kann. Insbesondere kann er einen Versorgungsüberschuss an anderer Stelle des Gesamtnetzes zur Deckung einer dort zu erwartenden Belastungsspitze nutzen.

Es kann auch vorteilhaft sein, seitens der Vermittlungsplattform aus der Differenz zwischen der Gesamtzufuhr und einer festgestellten Gesamtabfuhr einen Belastungswert für das Teilnetz zu ermitteln. Der Belastungswert ist damit eine Bilanzgröße über das Verhältnis zwischen privater Einspeisung und privatem Verbrauch in dem Teilnetz, die positiv oder negativ zu Gunsten der Einspeisung sein kann. Im Idealfall ist die Bilanz ausgeglichen.

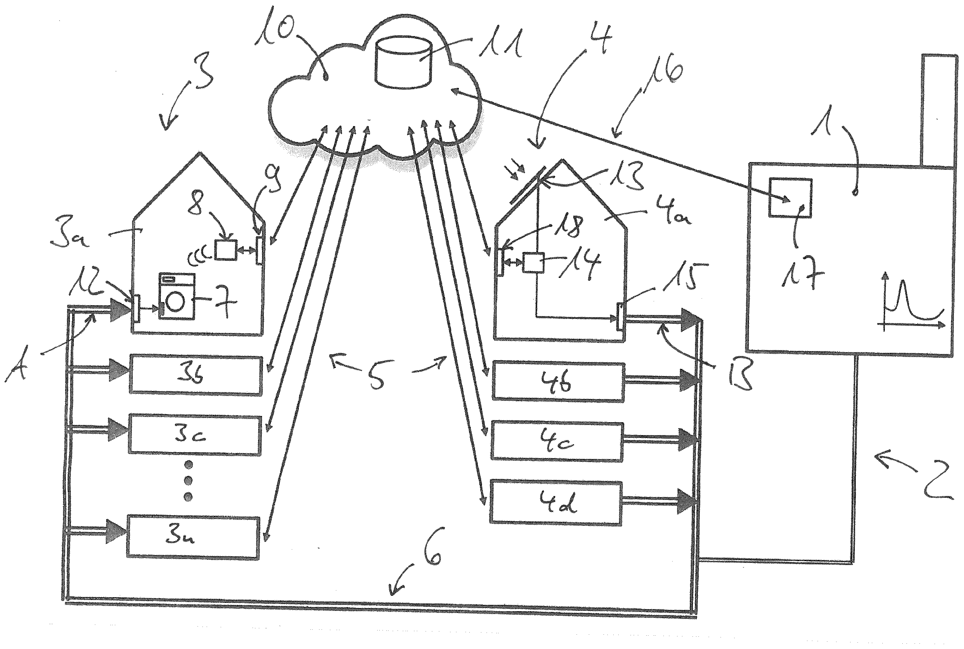

Die Erfindung wird nachfolgend anhand der Figur näher beschrieben.

Die Figur zeigt einen Energieversorger 1, der über ein Stromnetz 2 eine Vielzahl von Kleinverbrauchern 3, wie private Haushalte und kleine industrielle Abnehmer, mit Strom versorgt. Einige der Kleinverbraucher 3 sind auch Privaterzeuger 4 und speisen Strom aus eigener Erzeugung, insbesondere aus Photovoltaik- und/oder Blockheizkraftwerken, in das Stromnetz ein. Sowohl die von jedem Kleinverbraucher 3 verbrauchte Strommenge als auch die wird von jedem Privaterzeuger 4 eingespeiste individuelle Zufuhrmenge wird ermittelt und jeweils über eine Datenleitung 5 via Internet 10 an eine zentrale Vermittlungsplattform 11 gesendet. In der Figur sind die Verbraucher 3a, 3b, 3c bis 3n zu Zwecken der besseren Übersicht von den Privaterzeugern 4a, 4b, 4c und 4d getrennt.

Erfindungsgemäß ist eine bestimmte Anzahl von Kleinverbrauchern 3 innerhalb eines Teilnetzes 6 auf niedriger Spannungsebene zusammengefasst. Die Kleinverbraucher 3 sind mit "stromfressenden" Haushaltsgeräten 7 ausgestattet, die über eine Hausautomation 8 Informationen, wie Steuerungssignale oder Schaltbefehle, erhalten. Die Hausautomation 8 ist über einen Router 9 via der Datenleitungen 5 mit dem Internet 10 verbunden und kommuniziert über diese Verbindung mit der Vermittlungsplattform 11. Über diesen Weg wird auch der ermittelte Verbrauch eines jeden Kleinverbrauchers über die Datenleitung 5 an die im Internet angeschlossene Vermittlungsplattform 11 gesendet, wo die Gesamtabfuhr durch Summation der einzelnen Verbrauche ermittelt wird. Die Haushaltsgeräte 7 werden über die Stromanschlüsse 12 aus dem Teilnetz 6 mit Strom versorgt (Pfeil A). Das Einschalten der der einzelnen Haushaltsgeräte 7 erfolgt innerhalb vorgegebener Zeitfenster vermittels eines seitens der Vermittlungsplattform 11 erzeugten und über die Hausautomation 8 gesendeten Einschaltbefehls.

Auf der anderen Seite sind die Privaterzeuger 4 an das Teilnetz 6 angeschlossen, die in diesem Falle über Solaranlagen 13 Strom produzieren, der über eine Steuereinheit 14 gemessen und über die Anschlüsse 15 in das Teilnetz 6 eingespeist wird (Pfeil B). Die Menge des jeweils eingespeisten Stromes wird über einen Router 18 und die Datenleitung 5 der über das Internet 10 erreichbaren Vermittlungsplattform 11 zugeführt. Der Vermittlungsplattform 11 liegen somit die individuellen Zufuhrmengen aller Privaterzeuger 4 vor, so dass sie daraus die komplette in das Teilnetz eingespeiste Strommenge (Gesamtzufuhr) als Summe der individuellen Zufuhrmengen ermitteln kann. Erfindungsgemäß stellt die Vermittlungsplattform 11 den Kleinverbrauchern 3 über das Internet 10 Zufuhrinformation bezüglich der berechneten aktuellen und prognostizierten Gesamtzufuhr zur Verfügung, die sich in dem Einschaltbefehl zum unmittelbaren Einschalten des Gerätes manifestieren kann oder zum Betrieb der Ampellogik herangezogen wird. Die Vermittlungsplattform 11 kann darüber hinaus auch den aktuellen Belastungswert im Teilnetz 6 als Differenz zwischen Gesamtzufuhr und Gesamtabfuhr berechnen und übertragen.

Zudem steht die Vermittlungsplattform 11 über eine Internetbasierte Datenleitung 16 mit der Steuereinheit 17 des Energieversorgers 1 in Verbindung und kann ihm den Wert für die Gesamtzufuhr respektive auch für die aktuelle Belastung mitteilen. Daraus kann der Energieversorger 1 eine eventuell zu deckende Unterversorgung ermitteln und dem Teilnetz 6 über das Netz 2 Energie zuführen. Auf der anderen Seite kann der Energieversorger 1 auch im Teilnetz produzierte Überkapazitäten auf andere Teilnetze verteilen und/oder das Gesamtnetz stabilisieren. Der Stromnetzbetreiber ist somit immer über die Steuerungsaktivitäten im Bilde und kann diese bei Bedarf "übersteuern".

Zur Einholung von Wetterprognosen ist die Vermittlungsplattform 11 mit einem Wetterdienst über das Internet 10 verbunden.

## Patentansprüche

1. Verfahren zur Steuerung der Lastverteilung in einem von einem Energieversorger (1) versorgten Stromnetz (2), über das Kleinverbraucher (3), wie private Haushalte und kleine industrielle Abnehmer, versorgt werden, wobei einige der Kleinverbraucher (3) als Privaterzeuger (4) Strom aus eigener Erzeugung, insbesondere aus Photovoltaikanlagen (13) und/oder Blockheizkraftwerken, in das Stromnetz (2) einspeisen, wobei die von jedem Privaterzeuger (4) eingespeiste individuelle Zufuhrmenge gezählt wird,
wobei in dem Stromnetz vorhandene Niederspannungsnetze umfassend eine Anzahl von ortsnahen Kleinverbrauchern (3) und Privaterzeugern als Teilnetze (6) definiert werden, die an einem Übergabepunkt, an dem eine Transformation stattfindet, in ein Mittelspannungsnetz münden, wobei die von den Privaterzeugern (4) in das Teilnetz eingespeisten Strommengen als individuelle Zufuhrmengen ermittelt werden, wobei Information über die Höhe der ermittelten individuellen Zufuhrmengen über ein Datenleitungsnetz (10) an eine zentrale Vermittlungsplattform (11) gesendet werden, wobei aus der Summe der individuellen Zufuhrmengen eine Gesamtzufuhr berechnet wird und wobei die Vermittlungsplattform (11) über das Datenleitungsnetz (10) eine Zufuhrinformation bezüglich der berechneten Gesamtzufuhr an die Kleinverbraucher (3) in dem Teilnetz überträgt, wobei die den Kleinverbrauchern (3) dargebotene Zufuhrinformation dergestalt ist, dass sie ihren individuellen Verbrauch danach einrichten können,
**dadurch gekennzeichnet,**
die Vermittlungsplattform (11) dem Energieversorger (1) die Gesamtzufuhr über eine internetbasierte Datenleitung (16) an dessen Steuereinheit (17) mitteilt, aus der dieser eine eventuell zu deckende Unterversorgung ermittelt und dem Teilnetz (6) über das Stromnetz (2) Energie zuführt und das Vorhandensein eines Versorgungsüberschusses ermittelt und die produzierten Überkapazitäten auf andere Teilnetze verteilt,
dass die Information unmittelbar an das stromverbrauchende Elektrogerät (7) übermittelt und dort dem Nutzer als Einschaltinformation dargeboten wird und die Darbietung in der Art einer Ampel geschieht, wobei ein rotes Signal auf eine niedrige Gesamtzufuhr in das Teilnetz und damit auf einen ungünstigen Einschaltzeitpunkt und ein grünes Signal auf eine hohe Gesamtzufuhr in das Teilnetz (6) und damit auf einen günstigen Einschaltzeitpunkt hinweist.

2. Verfahren nach Anspruch 1,
**dadurch gekennzeichnet,**
**dass** die Vermittlungsplattform (11) bei der Berechnung der Gesamtzufuhr Prognosen über die zukünftig zu erwartende Gesamtzufuhr berücksichtigt.

3. Verfahren nach Anspruch 2,
**dadurch gekennzeichnet,**
**dass** sich die Prognosen an der Wettervorhersage, insbesondere an der zu erwartenden Sonneneinstrahlung an den Standorten der Privaterzeuger orientieren.

4. Verfahren nach einem der vorherigen Ansprüche,
**dadurch gekennzeichnet,**
**dass** der Vermittlungsplattform (11) seitens eines Kleinverbrauchers (3) ein Zeitfenster für einen Einschaltzeitpunkt eines Haushaltsgerätes (7) vorgegeben wird und dass die Vermittlungsplattform (11) in Abhängigkeit der berechneten Gesamtzufuhr in dem Zeitfenster einen Schaltbefehl überträgt, mit dem das Haushaltsgerät (7) unmittelbar angesteuert wird.

5. Verfahren nach einem der vorherigen Ansprüche,
**dadurch gekennzeichnet,**
**dass** die Kleinverbraucher (3) innerhalb eines Stadtnetzes zu einem Teilnetz (6) zusammengefasst werden.

6. System zur Durchführung des Verfahrens nach einem der vorherigen Ansprüche, aufweisend einen Energieversorger (1), der Kleinverbraucher (3) über ein Stromnetz (2) mit Strom versorgt, wobei Privaterzeuger (4) vorhanden sind, die Strom aus eigener Erzeugung in das Stromnetz (2,6) einspeisen, wobei die von jedem Privaterzeuger (4) eingespeiste individuelle Zufuhrmenge gezählt wird,
wobei in dem Stromnetz vorhandene Niederspannungsnetze umfassend eine Anzahl von ortsnahen Kleinverbrauchern (3) und Privaterzeugern als Teilnetze (6) definiert sind, die an einem Übergabepunkt, an dem eine Transformation stattfindet, in ein Mittelspannungsnetz münden, wobei eine über ein Datenleitungsnetz (10), insbesondere über das Internet, mit den Kleinverbrauchern (3) in datenleitender Verbindung stehende zentrale Vermittlungsplattform (11) eingerichtet ist, die eine Ermittlung individueller Zufuhrmengen und eine Berechnung einer Gesamtzufuhr als Summe der individuellen Zufuhrmengen durchführt, wobei die Vermittlungsplattform (11) den in dem Teilnetz zusammengefassten Kleinverbrauchern (3) über das Datenleitungsnetz (10) Zufuhrinformation entsprechend der berechneten Gesamtzufuhr zur Verfügung stellt, wobei die den Kleinverbrauchern (3) dargebotene Zufuhrinformation dergestalt ist, dass sie ihren individuellen Verbrauch danach einrichten können,
**dadurch gekennzeichnet,**
**dass** die Vermittlungsplattform (11) dem Energieversorger (1) die Gesamtzufuhr über eine internetbasierte Datenleitung (16) an dessen Steuereinheit (17) mitteilt, aus der dieser eine eventuell zu deckende Unterversorgung ermittelt und dem Teilnetz (6) über das Stromnetz (2) Energie zuführt und das Vorhandensein eines Versorgungsüberschusses ermittelt und die produzierten Überkapazitäten auf andere Teilnetze verteilt, dass die Information unmittelbar an das stromverbrauchende Elektrogerät (7) übermittelt und dort dem Nutzer als Einschaltinformation dargeboten wird und die Darbietung in der Art einer Ampel geschieht, wobei ein rotes Signal auf eine niedrige Gesamtzufuhr in das Teilnetz und damit auf einen ungünstigen Einschaltzeitpunkt und ein grünes Signal auf eine hohe Gesamtzufuhr in das Teilnetz (6) und damit auf einen günstigen Einschaltzeitpunkt hinweist.

7. System nach Anspruch 6,
**dadurch gekennzeichnet,**
**dass** die Vermittlungsplattform (11) zur Einholung von Wetterprognosen mit einem Wetterdienst über das Datenleitungsnetz (10) verbunden ist.

## Claims

1. A method for controlling the load distribution in a power grid (2) supplied by an energy provider (1), via which small-scale consumers (3) such as private households and small industrial customers are supplied, wherein some of the small-scale consumers (3) feed electricity from their own generation, in particular from photovoltaic systems (13) and/or cogeneration units, into the power grid (2) as private producers (4), wherein the individual input quantity supplied by each private producer (4) is measured,
wherein low-voltage grids present in the power grid, comprising a plurality of local small-scale consumers (3) and private producers, are defined as sub-grids (6), which merge into a medium-voltage grid at a transfer point where a transformation takes place, wherein the quantities of electricity fed into the sub-grid by private producers (4) are determined as individual input quantities, wherein information on the amount of the determined individual input quantities is sent to a central intermediary platform (11) via a data transmission network (10), wherein a total input is calculated from the sum of the individual input quantities and wherein the intermediary platform (11) transmits input information regarding the calculated total input to the small-scale consumers (3) in the sub-grid via the data transmission network (10), wherein the input information presented to the small-scale consumers (3) is such that they can adjust their individual consumption accordingly,
**characterized in that**
the intermediary platform (11) communicates the total input via an internet-based data line (16) to the control unit (17) of the energy provider (1), from which the latter determines a possible supply shortfall to be covered and subsequently supplies energy to the sub-grid (6) via the power grid (2), and determines the existence of a supply surplus and distributes the overcapacity produced to other sub-grids,
**in that** the information is transmitted directly to the electricity-consuming electrical appliance (7) and there is presented to the user as start-up information, and **in that** the presentation takes place in the manner of a traffic light, wherein a red signal indicates a low total supply to the sub-grid and thus an unfavourable start-up time and a green signal indicates a high total supply to the sub-grid (6) and thus a favourable start-up time.

2. The method according to Claim 1,
**characterized in that**
the intermediary platform (11) takes into account forecasts of the expected future total input during the calculation of the total input.

3. The method according to Claim 2,
**characterized in that**
the forecasts are based on the weather forecast, in particular on the solar radiation to be expected at the locations of the private producers.

4. The method according to any one of the preceding claims,
**characterized in that**
the intermediary platform (11) is given a time window for a start-up time of a household appliance (7) by a small-scale consumer (3) and that the intermediary platform (11) transmits a start-up command during the time window in dependence on the calculated total input, via which the household appliance (7) is directly controlled.

5. The method according to any one of the preceding claims,
**characterized in that**
the small-scale consumers (3) are combined into a sub-grid (6) within a city grid.

6. A system for executing the method according to any one of the preceding claims, having an energy provider (1), which supplies small-scale consumers (3) with electricity via a power grid (2), wherein private producers (4) are present who feed electricity from their own generation into the power grid (2, 6), wherein the individual input quantity supplied by each private producer (4) is measured,
wherein low-voltage grids present in the power grid, comprising a plurality of local small-scale consumers (3) and private producers are defined as sub-grids (6), which merge into a medium-voltage grid at a transfer point where a transformation takes place, wherein a central intermediary platform (11) is set up, which is connected to the small-scale consumers (3) via a data transmission network (10), in particular via the Internet, for the purpose of transmitting data, which intermediary platform (11) executes a determination of individual input quantities and a calculation of the total input from the sum of the individual input quantities, wherein the intermediary platform (11) provides input information according to the calculated total input to the small-scale consumers (3) combined in the sub-grid via the data transmission network (10), wherein the input information presented to the small-scale consumers (3) is such that they can adjust their individual consumption accordingly,
**characterized in that**
the intermediary platform (11) communicates the total input via an internet-based data line (16) to the control unit (17) of the energy supplier (1), from which the latter determines a possible supply shortfall to be covered and subsequently supplies energy to the sub-grid (6) via the power grid (2), and determines the existence of a supply surplus and distributes the overcapacity produced to other sub-grids, **in that** the information is transmitted directly to the electricity-consuming electrical appliance (7) and there is presented to the user as start-up information, and **in that** the presentation takes place in the manner of a traffic light, wherein a red signal indicates a low total supply to the sub-grid and thus an unfavourable start-up time and a green signal indicates a high total supply to the sub-grid (6) and thus a favourable start-up time.

7. The system according to Claim 6,
**characterized in that**
the intermediary platform (11) is connected to a weather service via the data transmission network (10) for obtaining weather forecasts.

## Revendications

1. Procédé de commande de la répartition de la charge dans un réseau électrique (2) alimenté par un fournisseur d'énergie (1) par l'intermédiaire duquel de petits consommateurs (3), tels que des ménages privés et de petits clients industriels, sont alimentés, dans lequel certains des petits consommateurs (3) en tant que producteurs privés (4) d'électricité alimentent un réseau électrique (2) à partir de leur propre production, notamment à partir de systèmes photovoltaïques (13) et/ou de centrales thermiques et électriques combinées,
dans lequel la quantité individuelle d'approvisionnement alimentée par chaque producteur privé (4) est comptée, dans lequel les réseaux basse tension présents dans le réseau électrique comprenant un nombre de petits consommateurs locaux (3) et de producteurs privés sont définis comme des sous-réseaux (6), qui aboutissent à un réseau moyenne tension à un point de transfert où une transformation a lieu, dans lequel des quantités d'électricité injectées par producteurs privés (4) dans le sous-réseau sont déterminés en tant que quantités d'approvisionnement individuelles, dans lequel des informations relatives au montant des quantités d'approvisionnement individuelles déterminées sont envoyées via un réseau de lignes de données (10) à une plate-forme de commutation centrale (11), dans lequel une fourniture totale est calculée d'après la somme des quantités d'approvisionnement individuelles et dans lequel la plate-forme de commutation (11) transmet via le réseau de lignes de données (10) une information relative au flux concernant le flux total calculé au niveau des petits consommateurs (3) dans le sous-réseau, dans lequel les informations de fourniture présentées aux petits consommateurs (3) sont telles qu'ils peuvent ensuite paramétrer leur consommation individuelle,
**caractérisé en ce que**
la plateforme de commutation (11) notifie au fournisseur d'énergie (1) la fourniture totale via une ligne de données internet (16) à l'unité de commande (17), à partir de laquelle un éventuel sous-approvisionnement est déterminé et alimente le sous-réseau (6) en énergie via le réseau électrique (2) et détermine la présence d'une alimentation excédentaire et distribue la capacité excédentaire produite à d'autres sous-réseaux,
**en ce que** l'information est transmise directement au dispositif électrique consommateur d'énergie (7) et y est présentée à l'utilisateur comme une information d'activation et la présentation se fait à la manière d'un feu de signalisation, dans lequel un signal rouge indique une faible alimentation totale dans le sous-réseau et donc un temps de mise en marche défavorable et un signal vert indique une alimentation totale élevée du sous-réseau (6) et donc un temps de mise en marche favorable.

2. Procédé selon la revendication 1,
**caractérisé en ce que**
la plateforme de commutation (11) prend en compte les prévisions de l'offre totale à prévoir dans le futur lors du calcul de l'offre totale.

3. Procédé selon la revendication 2,
**caractérisé en ce que**
les prévisions sont basées sur les prévisions météorologiques, notamment sur le rayonnement solaire à prévoir sur les sites des producteurs privés.

4. Procédé selon une quelconque des revendications précédentes,
**caractérisé en ce que**
la plate-forme de commutation (11) d'un petit consommateur (3) se voit attribuer une fenêtre temporelle pour une heure d'allumage d'un appareil électroménager (7) et que la plate-forme de commutation (11) transmet en fonction du calcul de l'alimentation totale une commande de commutation dans la fenêtre temporelle, avec laquelle l'appareil électroménager (7) est commandé directement.

5. Procédé selon une quelconque des revendications précédentes,
**caractérisé en ce que**
les petits consommateurs (3) au sein d'un réseau de ville sont combinés pour former un sous-réseau (6).

6. Système pour la mise en œuvre du procédé selon une des revendications précédentes, comprenant un fournisseur d'énergie (1), qui fournit de l'électricité aux petits consommateurs (3) via une alimentation électrique (2), dans lequel des producteurs privés (4) sont présents, qui alimentent de l'énergie de leur propre production dans le réseau électrique (2,6), dans lequel la quantité d'approvisionnement individuelle alimentée par chaque producteur privé (4) est comptée,
dans lequel les réseaux basse tension présents dans le réseau électrique comprenant un certain nombre de petits consommateurs locaux (3) et les producteurs privés sont définis comme des sous-réseaux (6), qui sont situés à un point de transfert, au niveau duquel une transformation a lieu, aboutissent à un réseau moyenne tension, dans lequel une plate-forme de commutation (11) connectée de manière conductrice de données avec les petits consommateurs (3) via un réseau conducteur de données (10), notamment via Internet, est conçue, qui effectue une détermination des quantités d'approvisionnement individuelles et un calcul d'une alimentation totale comme la somme des quantités d'approvisionnement individuelles, dans lequel la plate-forme de commutation (11) fournit aux petits consommateurs (3) combinés dans le sous-réseau via le réseau de ligne de données (10) une information d'alimentation correspondant à l'alimentation totale calculée, dans lequel l'information relative à l'offre est présentée aux petits consommateurs (3) de telle sorte qu'ils puissent configurer leur consommation individuelle en conséquence,
**caractérisé en ce que**
la plate-forme de commutation (11) communique au niveau de son unité de commande (17) au fournisseur d'énergie (1) un approvisionnement total via une ligne de données basée sur Internet (16), d'après laquelle celui-ci détermine une éventuelle sous-alimentation à couvrir et fournit de l'énergie au sous-réseau (6) via le réseau électrique (2) et détermine la présence d'une alimentation excédentaire et distribue la capacité excédentaire produite à d'autres sous-réseaux, **en ce que** l'information est transmise directement au dispositif électrique consommateur d'énergie (7) et est présentée à l'utilisateur comme une information de mise en marche et la présentation se fait à la manière d'un feu de signalisation, dans lequel un signal rouge indique une faible alimentation totale dans le sous-réseau et donc un temps d'allumage défavorable et un signal vert indique une alimentation totale élevée dans le sous-réseau (6) et donc un temps d'allumage favorable.

7. Système selon la revendication 6,
**caractérisé en ce que**
la plate-forme de commutation (11) est connectée pour obtenir des prévisions météorologiques à un service météo via le réseau de ligne de données (10).
